# EUROPEAN PATENT SPECIFICATION

(11) **EP 0 351 990 B1**
(45) Date of publication and mention of the grant of the patent: **06.04.1994**
(21) Application number: 89306914.6
(22) Date of filing: 07.07.1989
(51) Int. Cl.: G01H 9/00

(54) **A hydrophone**
Hydrophon
Hydrophone

(30) Priority: 20.07.1988 GB 8817256
(43) Date of publication of application: 24.01.1990
(73) Proprietor: GEC-MARCONI LIMITED, Stanmore, Middlesex HA7 4LY (GB)
(72) Inventor: Henning, Michael Laurence, Shepton Mallet Somerset BA4 6PY (GB); Curtis, Alan Charles, Somerton Somerset TA11 6SH (GB)
(74) Representative: Goddin, Jeremy Robert

(56) References cited:
- FR-A- 1 486 401
- GB-A- 2 189 110
- US-A- 4 193 130
- US-A- 4 510 588
- PATENT ABSTRACTS OF JAPAN, vol. 10, no. 20 (E-376)[2077], 25th January 1986; & JP-A-60 180 400

## Description

The present invention relates to hydrophones and more particularly to inertially insensitive optical fibre hydrophones.

Like all hydrophones the optical fibre version is subject to inertial or acceleration sensitivity, due to its own mass: that is, it cannot tell whether it is "seeing" an acceleration or a static force such as an acoustic pressure. This sensitivity depends upon the detailed design of the sensor as well as the intrinsic transduction mechanism, and can be reduced by a "balanced" design which nulls the effect of the acceleration, or by appropriate design and choice of materials which renders the design inherently inertially insensitive.

In a underwater towed array of acoustic sensors, the vibration levels can be very high, and the hydrophone inertial sensitivity needs to be correspondingly low; this applies to accelerations both along and across the array. To achieve this, balanced designs need to be used in general and a variety of methods are used in piezoelectric technology to achieve this. An alternative approach is to provide a reference sensor isolated from the measurand, but held in a fixed position relative to a sensor exposed to the measurand. This enables signals generated due to inertial effects experienced by the reference sensor to be subtracted from those of the exposed sensor. The problem with this type of arrangement is that the reference sensor has to be isolated from the measurand, while still being maintained in a fixed position relative to the exposed sensor. Such a device is disclosed in US Patent 4193130.

The present invention is concerned with a particular approach to balancing a fibre hydrophone in the longitudinal and/or perpendicular directions, for use in towed arrays and other underwater applications. The invention will be described with particular reference to a towed array, but is also relevant to dunking sonars and sonabuoys.

In most towed arrays, the hydrophones are mounted from the strain members, which can be two or more. The forcing function causing the unwanted acceleration outputs is applied via these strain members. It is assumed that the hydrophone will be fastened to these strain members, since these are the only structural elements in the array.

One way of obtaining balancing of a fibre coil, in the longitudinal direction is shown in GB-A-2 189 110. In this arrangement the hydrophone comprises a fibre coil having a mounting flange located midway along its length, such that axial/longitudinal acceleration causes equal and opposite distortions of the fibre on either side of the flange, thus cancelling the effects of axial acceleration. However this does not compensate in the perpendicular direction, and might be difficult to realise as a device with a single fixing. Another example of standard practice in conventional piezo electric type hydrophones is where the piezo stack is attached at each end to plates which are attached to the source of the acceleration; the pressure sensitivity is unbalanced while longitudinal acceleration is balanced.

An aim of the present invention is to provide some configurations in which some principles similar to those disclosed in GB-A-2 189 110 are used to achieve longitudinal and perpendicular balancing, while preserving acoustic sensitivity.

According to the present invention there is provided a hydrophone comprising an optical fibre coil embedded in an encapsulant material, a rigid former having an axial part extending inside the coil in an axial direction with respect thereto, and means for attaching the former to strain members by which, in use, the hydrophone is carried, the encapsulant being mounted on the axial part of the former in such a way that inertial forces generated on opposite sides of the coil by the acceleration of the former in a direction perpendicular to the axial part cause opposite effects thereby reducing the inertial sensitivity of the hydrophone.

Advantageously, the former comprises a central section orientated substantially orthogonal to and supporting said axial portion, wherein the coil comprises two portions positioned on said axial portion to either side of said central section, said central section driving the coil in a longitudinal direction providing longitudinal balancing such as to reduce inertial sensitivity.

In a preferred embodiment a secondary material having a lower bulk modulus than that of the encapsulant material is positioned between the former and the encapsulant material.

Embodiments of the present invention will now be described with reference to the accompanying drawings wherein:-
Figure 1 shows a hydrophone structure for a typical underwater towed array application;
Figure 2 shows a hydrophone structure employing a secondary material between a coil and a former;
Figure 3 shows a hydrophone structure where the ends of the coil encapsulant are unconstrained;
Figure 4 shows an alternative realisation of the hydrophone structure shown in Figure 3;
Figure 5 shows a hydrophone structure in which inertial insensitivity is achieved by driving from the centre; and
Figure 6 shows a hydrophone structure in which the acoustic sensitivity is enhanced by different means.

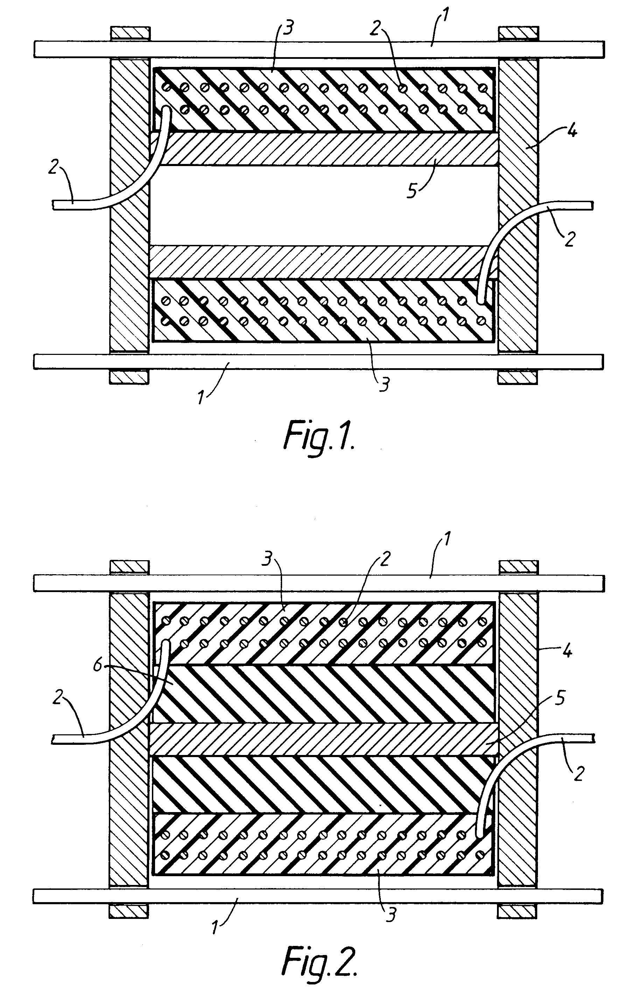

Referring to Figure 1, a structure for a typical underwater towed array application is shown. Longitudinal strain members 1 in the array are used to mount the internal equipment, including the hydrophones. A typical hydrophone might be as in the diagram, where the fibre coil 2 is encapsulated in a compressible material 3 and mounted on a rigid former attached to the strain members; the coil assembly is bonded well both to the ends of the bobbin shaped former and to the "axle" 5. Longitudinal balancing is achieved by the action of both the ends 4 and the axle 5, although some balancing could be achieved by either of these acting alone. In the perpendicular direction, it should be noted that the coil, driven symmetrically from within its circumference will always tend to be balanced, since a compressive force on one part will always be counteracted by opposite effects on another part of the coil.

In Figure 1, the axle part 5 of the rigid mount drives the coil in a perpendicular direction and consequently will achieve perpendicular balancing. By suitable choice of encapsulant material, and rigid material for the former, the acoustic sensitivity of the coil can be maintained. As a generalisation, the encapsulant should be of low bulk modulus, while the former should be of light weight, and have stiffness. The rigid former could be made of a low mass alloy or a rigid thermoset material. A variation of this technique is shown in Figure 2 where a secondary material 6 is used between the coil 2 and the former 4, 5, of lower bulk modulus than the encapsulant 3. This will increase the acoustic sensitivity whilst probably degrading the acceleration response, (air would be ideal from an acoustic viewpoint, but would not provide adequate coupling for vertical inertial compensation). The material 6, an example of which is a low modulus epoxy resin, should have a higher compressibility than the encapsulant 3. The encapsulant 3 could be rubber or resin epoxy for example.

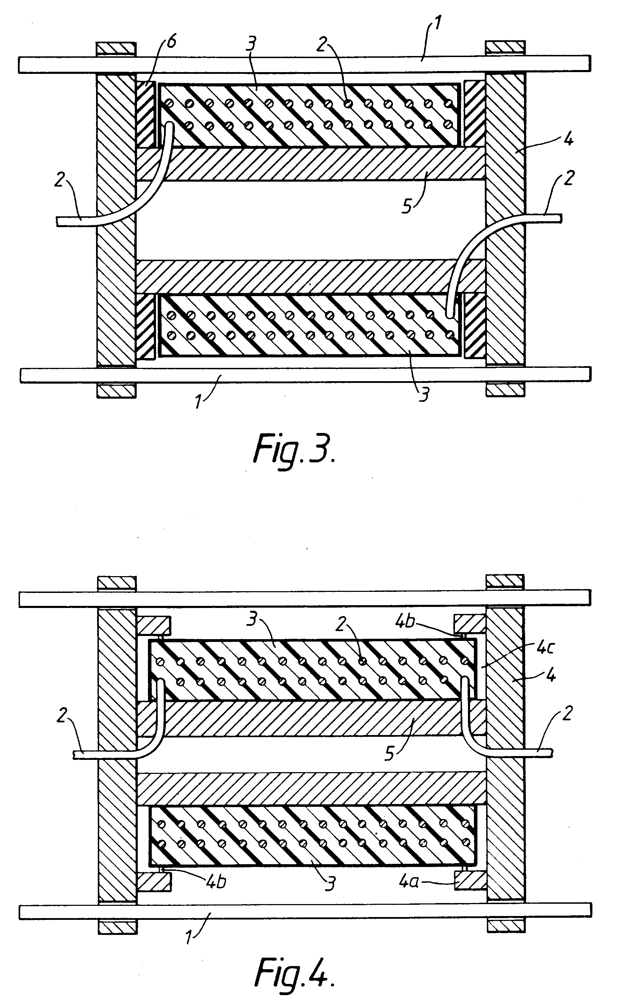

Yet another variation is shown in Figure 3, where the ends of the encapsulant are unconstrained, or rather less constrained than in previous examples, and secondary material 6 is inserted between the former ends 4 and encapsulant 3. If, in this case, the secondary material 6 was left out, hydrostatic pressure, acting on the ends would tend to reduce acoustic sensitivity. By a suitable choice of secondary material 6 or a secondary structure constraint should be reduced and acoustic sensitivity increased. The relative acceleration sensitivity would be affected by the design and materials used. Examples of secondary materials, which should have a high compressibility, i.e. a low bulk modulus, are air or foamed rubber. The encapsulant 3 would be rubber or epoxy resin, for example. Further examples of suitable hydrophone designs are given in Figures 4, 5 and 6.

Figure 4 illustrates an alternative realisation of the concept of Figure 3, in which the ends of the fibre encapsulant 3 are entirely unconstrained and the secondary material is air contained in gap 4c. The sensitivity to axial acceleration will now be dependent on the rigidity of the encapsulating material, and a material should be selected which yields a suitable compromise between maximum acoustic sensitivity and minimum acceleration sensitivity. The encapsulant 3 is supported on abutments 4a and sealed thereto by suitable means, for example o-rings 4b. The encapsulant 3 could be hard rubber, epoxy or polyester for example.

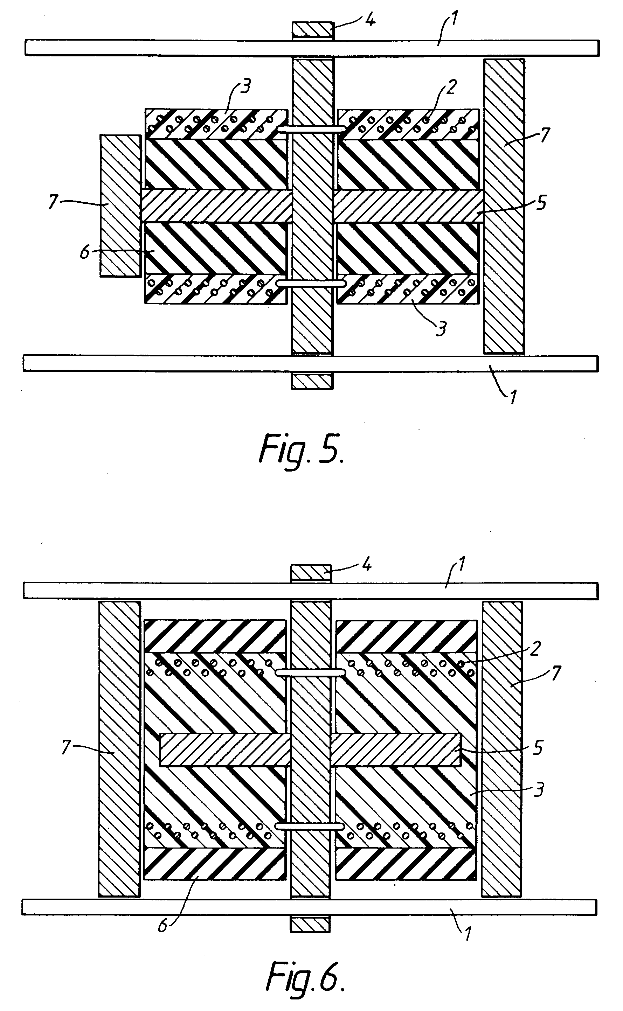

Figure 5 is a design in which both perpendicular and longitudinal inertial insensitivity is achieved by driving from the centre, both axially and radially via central section 4. In the hydrophone illustrated, the acoustic sensitivity is maximised by appropriate choice of a compressible internal material 6 between the "axle" 5 and the encapsulant 3; this may result in the requirement for end caps 7 as shown. Two examples of end caps are shown which differ in that the ends of the encapsulant 3 may be either exposed or covered. These prevent static pressure acting via the compressible layer 6 on the inner surface of the encapsulant 3, which would counter the effect of the static pressure on the outer surface of the coil. Examples of high compressible materials are air and polyester resin. The encapsulant 3 could be hard rubber or a low density polyethylene for example. In the example of Figure 5, fewer layers of fibres 2 would be required to achieve the desired effect than would be the case if the compressible material was not present.

Figure 6 represents a hydrophone in which the inertial sensitivity is reduced by ensuring the device is mechanically driven from the centre via central section 4. The end plates 7 act as piston, transferring pressure to the encapsulated fibre 2, whilst the secondary material 6 allows the encapsulant to expand in the perpendicular direction to an extent dependent upon its properties. The secondary material 6, should be a pressure release material i.e. it reflects sound waves in water, examples of which are, air, cork with rubber, and foam. The encapsulant material 3 could be soft rubber, or soft epoxy composite.

Finally the structure could be driven from a central flange as in GB-A-2 189 110, rather than from an end flange as in the examples above.

It should be noted that the arrangements illustrated in Figures 1 - 6 do not necessarily represent the only practical approach. Variations may be envisaged within the scope of the claimed invention by those skilled in the art. In particular in Figures 1-5, the "axle" could comprise an open ended tube, allowing cables to be routed along the axis of the assembly. Also various examples of encapsulant, secondary material and rigid former material have been given, but it will be realised that other materials could be suitable.

## Claims

1. A hydrophone comprising an optical fibre coil (2) embedded in a compressible encapsulant material (3), a rigid former having an axial part (5) extending inside the coil (2) in an axial direction with respect thereto, and means for attaching the former to strain members (1) by which, in use, the hydrophone is carried, the encapsulant (3) being mounted on the axial part (5) of the former in such a way that inertial forces generated on opposite sides of the coil (2) by acceleration of the former in a direction perpendicular to the axial part, cause opposite effects, thereby reducing the inertial sensitivity of the hydrophone.

2. A hydrophone as claimed in claim 1, wherein the former further comprises a central section (4) orientated substantially orthogonal to and supporting said axial portion (5), wherein two caps (7) are positioned on said axial portion to either side of said central section (4), said central section (4) driving the coil (2) in a longitudinal direction providing longitudinal balancing of the coil (2) such as to reduce inertial sensitivity.

3. A hydrophone as claimed in claim 1, wherein the rigid former is bobbin shaped and comprises an axial portion (5) and end parts (4), the end parts driving the coil (2) in a longitudinal direction providing longitudinal balancing of the coil (2) such as to reduce inertial sensitivity.

4. A hydrophone as claimed in claim 1, wherein the former comprises end parts (7) which are remote from the axial portion (5) and act as pistons transferring pressure to the encapsulant material (3).

5. A hydrophone as claimed in claim 4, wherein a secondary material (6) having a lower bulk modulus of elasticity than the encapsulant material (3) surrounds surfaces of the encapsulant material (3) not adjacent to the end parts (7).

6. A hydrophone as claimed in any one of claims 1 to 3, wherein a secondary material (6) having a lower bulk modulus than that of the encapsulant material (3) is positioned between the former and the encapsulant material (3).

7. A hydrophone as claimed in any preceding claim, wherein the rigid former has the properties of low mass and stiffness.

8. A hydrophone as claimed in any preceding claim, wherein the rigid former is of a low mass alloy material.

9. A hydrophone as claimed in any preceding claim wherein the encapsulant material (3) is bonded to the rigid former.

10. A hydrophone as claimed in claim 5 or 6, wherein the encapsulant material (3) is rubber or epoxy resin and the secondary material (6) is an epoxy resin of lower bulk modulus than the encapsulant.

11. A hydrophone as claimed in claim 5 or 6, wherein the encapsulant material (3) is rubber or a low density polyethylene and the secondary material (6) is air, foam, cork, an air composition, thermoplastic, epoxy resin or polyester resin.

12. A hydrophone as claimed in claim 5 or 6, wherein the encapsulant material (3) is soft rubber or soft epoxy resin and the secondary material (6) is air, cork with rubber, or foam.

## Patentansprüche

1. Ein Hydrophon mit einer optischen Faser-Spule (2), die in einem kompressiblen Einkapselungs-Material (3) eingebettet ist, einer starren Formeinrichtung mit einem axialen Teil (5), das sich innerhalb der Spule (2) bezüglich dieser in eine axiale Richtung erstreckt, und Mitteln zum Befestigen der Formeinrichtung an Dehnungs-Bauteilen (1), durch welche bei Benutzung das Hydrophon getragen wird, wobei die Einkapselung (3) auf dem axialen Teil (5) der Formeinrichtung auf eine solche Weise befestigt ist, daß Trägheitskräfte, die auf entgegengesetzten Seiten der Spule (2) durch eine Beschleunigung der Formeinrichtung in eine Richtung senkrecht zum axialen Teil erzeugt werden, entgegengesetzte Effekte verursachen und dadurch die Trägheitsempfindlichkeit des Hydrophons reduzieren.

2. Ein Hydrophon wie in Anspruch 1 beansprucht,
worin die Formeinrichtung weiter ein zentrales Teilstück (4) umfaßt, das im wesentlichen orthogonal zum axialen Abschnitt (5) orientiert ist und diesen trägt, und zwei Kappen (7) auf dem axialen Abschnitt zu beiden Seiten des zentralen Teilstücks (4) positioniert sind, wobei das zentrale Teilstück (4) die Spule (2) in eine longitudinale Richtung treibt, wodurch ein longitudinales Ausgleichen der Spule (2) geschaffen wird, um die Trägheitsempfindlichkeit zu reduzieren.

3. Ein Hydrophon wie in Anspruch 1 beansprucht,
worin die starre Formeinrichtung spulenförmig ist und einen axialen Abschnitt (5) und Endteile (4) umfaßt, wobei die Endteile die Spule (2) in eine longitudinale Richtung treiben, wodurch ein longitudinales Ausgleichen der Spule (2) geschaffen wird, um eine Trägheitsempfindlichkeit zu reduzieren.

4. Ein Hydrophon wie in Anspruch 1 beansprucht,
worin die Formeinrichtung Endteile (7) umfaßt, die vom axialen Abschnitt (5) entfernt sind und als Kolben wirken, welche Druck zum Einkapselungs-Material (3) übertragen.

5. Ein Hydrophon wie in Anspruch 4 beansprucht,
worin ein sekundäres Material (6) mit einem geringeren räumlichen Elastizitätsmodul als das Einkapselungs-Material (3) Oberflächen des Einkapselungs-Materials (3) umgibt, welche nicht benachbart zu den Endteilen (7) liegen.

6. Ein Hydrophon wie in einem der Ansprüche 1 bis 3 beansprucht,
worin ein sekundäres Material (6) mit einem geringeren Kompressionsmodul als demjenigen des Einkapselungs-Materials (3) zwischen der Formeinrichtung und dem Einkapselungs-Material (3) positioniert ist.

7. Ein Hydrophon wie in einem der vorhergehenden Ansprüche beansprucht,
worin die starre Formeinrichtung die Eigenschaften geringer Masse und Steifigkeit aufweist.

8. Ein Hydrophon wie in einem der vorhergehenden Ansprüche beansprucht,
worin die starre Formeinrichtung aus einem Legierungs-Material geringer Masse besteht.

9. Ein Hydrophon wie in einem der vorhergehenden Ansprüche beansprucht,
worin das Einkapselungs-Material (3) mit der starren Formeinrichtung verbunden ist.

10. Ein Hydrophon wie in Anspruch 5 oder 6 beansprucht,
worin das Einkapselungs-Material (3) Gummi oder Epoxyharz und das sekundäre Material (6) ein Epoxyharz geringeren Kompressionsmoduls als die Einkapselung ist.

11. Ein Hydrophon wie in Anspruch 5 oder 6 beansprucht,
worin das Einkapselungs-Material (3) Gummi oder ein Polyäthylen geringer Dichte und das sekundäre Material (6) Luft, Schaum, Kork, eine Luftzusammensetzung, Thermoplastik, Epoxyharz oder Polyesterharz ist.

12. Ein Hydrophon wie in Anspruch 5 oder 6 beansprucht,
worin das Einkapselungs-Material (3) weiches Gummi oder weiches Epoxyharz und das sekundäre Material (6) Luft, Kork mit Gummi oder Schaum ist.

## Revendications

1. Hydrophone comprenant une bobine de fibre optique (2) noyée dans un matériau encapsulant compressible (3), un gabarit d'enroulement rigide ayant une partie axiale (5) qui s'étend à l'intérieur de la bobine (2) dans une direction axiale par rapport à celle-ci, et des dispositifs pour fixer le gabarit d'enroulement à des élément d'ancrage (1) par lesquels, en fonctionnement, l'hydrophone est porté, l'encapsulant (3) étant monté sur la partie axiale (5) du gabarit d'enroulement, de telle manière que les forces inertielles produites sur les côtés opposés de la bobine (2) par l'accélération du gabarit d'enroulement dans une direction perpendiculaire à la partie axiale provoquent des effets opposés en réduisant ainsi la sensiblité inertielle de l'hydrophone.

2. Hydrophone selon la revendication 1, dans lequel le gabarit d'enroulement comprend en outre une section centrale (4) orientée sensiblement perpendiculairement à ladite partie axiale (5) qu'elle supporte, deux capuchons (7) sont placés sur ladite partie axiale de chaque côté de ladite section centrale (4), ladite section centrale (4) entraînant la bobine (2) dans une direction longitudinale en procurant un équilibrage longitudinal de la bobine (2) de manière à réduire la sensibilité inertielle.

3. Hydrophone selon la revendication 1, dans lequel le gabarit d'enroulement rigide est en forme de bobine et comprend une partie axiale (5) et des parties terminales (4), les parties terminales entraînant la bobine (2) dans une direction longitudinale en procurant un équilibrage longitudinal de la bobine (2) de manière à réduire la sensibilité inertielle.

4. Hydrophone selon la revendication 1, dans lequel le gabarit d'enroulement comprend des parties terminales (7) qui sont distantes de la partie axiale (5) et qui agissent comme des pistons transférant la pression au matériau encapsulant (3).

5. Hydrophone selon la revendication 4, dans lequel un matériau secondaire (6) ayant un module d'élasticité spatiale inférieur à celui du matériau encapsulant (3) entoure les surfaces du matériau encapsulant (3) qui ne sont pas adjacentes aux parties terminales (7).

6. Hydrophone selon l'une quelconque des revendications 1 à 3, dans lequel un matériau secondaire (6) ayant un module d'élasticité spatiale inférieur à celui du matériau encapsulant (3) est placé entre le gabarit d'enroulement et le matériau encapsulant (3).

7. Hydrophone selon l'une quelconque des revendications précédentes, dans lequel le gabarit d'enroulement rigide présente des propriétés de faible masse et de rigidité.

8. Hydrophone selon l'une quelconque des revendications précédentes, dans lequel le gabarit d'enroulement rigide est en un matériau d'alliage de faible masse.

9. Hydrophone selon l'une quelconque des revendications précédentes, dans lequel le matériau encapsulant (3) est lié au gabarit d'enroulement rigide.

10. Hydrophone selon la revendication 5 ou 6, dans lequel le matériau encapsulant (3) est du caoutchouc une résine époxy et le matériau secondaire (6) est une résine époxy de module d'élasticité spatiale inférieur à celui de l'encapsulant.

11. Hydrophone selon la revendication 5 ou 6, dans lequel le matériau encapsulant (3) est du caoutchouc ou un polyéthylène basse densité et le matériau secondaire (6) est l'air, une mousse, du liège, une composition à base d'air, une matière thermoplastique, une résine époxy ou une résine de polyester.

12. Hydrophone selon la revendication 5 ou 6, dans lequel le matériau encapsulant (3) est du caoutchouc mou ou une résine époxy molle et le matériau secondaire (6) et l'air, du liège avec du caoutchouc ou une mousse.
